# EUROPÄISCHE PATENTSCHRIFT

(11) **EP 3 261 967 B1**
(45) Veröffentlichungstag und Bekanntmachung des Hinweises auf die Patenterteilung: **05.06.2019**
(21) Anmeldenummer: 16705933.6
(22) Anmeldetag: 19.02.2016
(51) Int. Cl.: B65H 54/58, B01D 63/02

(54) **VORRICHTUNG UND VERFAHREN ZUM HANDHABEN EINES AUFGEHASPELTEN FADENSTRANGS**
DEVICE AND METHOD FOR HANDLING A WOUND THREAD STRAND
DISPOSITIF ET PROCÉDÉ DE MANIPULATION D'UN ÉCHEVEAU DE FILS ENROULÉS

(30) Priorität: 23.02.2015 DE 102015002252
(43) Veröffentlichungstag der Anmeldung: 03.01.2018
(73) Patentinhaber: Filatech Filament Technology u. Spinnanlagen GmbH, 53424 Remagen (DE)
(72) Erfinder: REUSCHENBACH, Hermann, 80807 München (DE)
(74) Vertreter: Weickmann & Weickmann PartmbB
(86) Internationale Anmeldenummer: PCT/EP2016/053580
(87) Internationale Veröffentlichungsnummer: WO 2016/135063

(56) Entgegenhaltungen:
- EP-A2- 2 089 304
- WO-A2-2005/039793
- CH-A5- 572 859
- DE-A1-102012 021 011
- JP-A- H08 299 763

## Beschreibung

Die vorliegende Erfindung betrifft eine Vorrichtung und ein Verfahren, um einen Fadenstrang, der insbesondere aus Hohlfäden für Dialysatoren und ähnliche Filtereinrichtungen besteht, und der auf einer sogenannten 2-Punkt-Haspel aufgewickelt wurde, in einem vollautomatischen Ablauf für nachfolgende Arbeitsgänge bereitzustellen, z.B. um ihn mit Folie zu umhüllen und in einzelne Bündel aufzuteilen. Dazu muss der Strang insbesondere von der Haspel abgenommen und zu einer Weiterverarbeitungsstation transportiert werden.

An einer "2-Punkt-Haspel" (gelegentlich auch als "2-Zinken-Haspel" oder "two-point reel winding device" bezeichnet) sind nur zwei Tragarme zur Aufnahme des Wickelgutes angebracht, so dass die zugeführten Fäden zu einem linearen Strang aufgehaspelt werden. Diese Bauart ist u. a. in den Veröffentlichungen EP 0 309 331 B1, JP 00 2009 234 680 A, JP 00 2008 280 111 A, JP 00 2003 300 672 A, US 4666543 A, JP 000H05161 830 A und FR 00000 267 4231 A1 erwähnt, jedoch ist in keinem dieser Dokumente ein automatischer Ablauf beschrieben. Zwar ist in EP 0 309 331 B1 angedeutet, dass der Abstand der beiden Tragarme mittels einer teleskopartigen Vorrichtung verkürzt werden kann, wohl um das Bündel leichter von der Haspel abnehmen zu können, aber es ist nicht zu erkennen, wie dieser Vorgang selbsttätig ablaufen soll.

Dagegen ist in EP 2 089 304 A2 eine Lösung mit zwei Haspeln beschrieben, die eine vollautomatische Arbeitsweise ermöglicht. Der Oberbegriff von Anspruch 1 beruht auf dieser Druckschrift. Während die erste Haspelt rotiert und aus den zugeführten Fäden einen Strang bildet, befindet sich die zweite Haspel in einer Weiterverarbeitungs-Position, wo der Strang, noch auf der Haspelt aufgespannt, mit Folie umwickelt und in einzelne Bündel aufgeteilt wird. Beide Haspeln sind gemeinsam um eine horizontale Achse um 180° zu schwenken, so dass sie alternierend vom Aufhaspeln zur Bündelherstellung und wieder zurück wechseln können.

Hier wird also der Strang mitsamt der Haspel zur Weiterverarbeitung transportiert und erst dort von der Haspel getrennt. Nachteilig an dieser Anordnung ist der erhöhte Herstellungsaufwand, da alle Komponenten, wie z.B. Haspel-Balken, Lagerung, Antrieb, Drehzahl-Steuerung, Haspelknöpfe, Faden-Klemmung, Stauch- und Streck-Einrichtungen, Drehdurchführung der Energie- und Steuerleitungen usw. immer zweifach vorhanden sein müssen, mitsamt den zugehörigen Steuerungen. Zudem muss für jede Stelle, an der ausgehaspelt wird, immer auch eine eigene Vorrichtung für die Weiterverarbeitung vorhanden sein, auch wenn deren Zykluszeit kurz genug wäre, um zwei oder mehr gleichzeitig arbeitende Haspeln bedienen zu können. Wegen dieser starren Verknüpfung ist es auch nicht möglich, auf eine andere Vorrichtung auszuweichen, wenn mal eine Störung bei der Weiterverarbeitung auftritt.

Weiterhin nachteilig ist der Platzbedarf dieser Anordnung: Da Haspel- und Weiterverarbeitungsposition unmittelbar nebeneinander platziert sein müssen, ergibt sich - in Laufrichtung der Fäden gesehen - eine große Baubreite der Anlage; dies kann ungünstig sein, wenn die von einer Spinnanlage gelieferten Fäden auf vier oder sechs Haspeleinrichtungen aufgeteilt werden sollen, was bei manchen Dialysatoren-Herstellern üblich ist.

In der DE 10 2015 000 247.3 wird vorgeschlagen, den Fadenstrang auf der Haspel an beiden Enden durchzutrennen, um ihn dann abnehmen und weitertransportieren zu können, wobei die an den Tragarmen abgeschnittene Strang-Enden abgesaugt werden. Mit dieser Lösung können die Nachteile der o.g. Ausführungen vermieden werden. Es sind jedoch auch Anwendungsfälle bekannt, bei denen das Durchtrennen des Fadenstrangs nicht zulässig ist, z.B. wenn der Strang als Ganzes direkt in mehrere Filtergehäuse eingezogen werden soll, oder wenn die Fäden an den Enden geschlossen sein müssen, wie es z.B. die in EP 0 309 331 B1 oder US 4666543 beschriebenen Herstellungsverfahren erfordern. Es kann auch vorteilhaft sein, die Ausbeute an nutzbarer Strang-Länge zu erhöhen, indem die Hohlfäden aus dem Bereich der 180°-Umlenkung teilweise noch zur Bündelherstellung verwendet werden.

Die hier beschriebene Erfindung hat sich die Aufgabe gestellt,
- die Nachteile der oben erwähnten Vorschläge zu vermeiden
- und eine kostengünstige Lösung zu schaffen,
- bei der ein Fadenstrang als Ganzes, ohne ihn durchzutrennen, von der Haspel abzunehmen und weiterzutransportieren ist.

Dieses Ziel wird durch eine Vorrichtung entsprechend den in Patentanspruch 1 genannten Merkmalen sowie durch das in den weiteren Ansprüchen erwähnte Verfahren erreicht. Damit lassen sich folgende Vorteile erzielen:
a) geringer Aufwand, da gegenüber EP 2 089 304 B1 nur die halbe Anzahl von Haspeln, nur Anfangsklemmen (und keine Endklemmen) sowie keine Drehdurchführungen für Signal- und Energieleitungen erforderlich sind;
b) flexible Raumaufteilung, da die Weiterverarbeitung in einer beliebigen Position seitlich oder hinter der Haspel vorgesehen werden kann;
c) mögliche Kosteneinsparung, da ggf. eine einzige Vorrichtung die Weiterverarbeitung von Fadensträngen aus mehreren Haspeln übernehmen kann;
d) Vermeidung von Ausfallzeiten bei Störungen, da bei entsprechender Ausgestaltung vorübergehend auf eine andere Weiterverarbeitungsvorrichtung ausgewichen werden kann.

Ein Ausführungsbeispiel der genannten Erfindung ist den folgenden Zeichnungen dargestellt.
Fig.1 zeigt eine Draufsicht der Haspel und der erfindungsgemäßen Vorrichtung zum Handhaben des Fadenstrangs,
Fig. 2 einen Schnitt entlang der Linie A-A aus Fig.1,
Fig. 3a und 3b einen Schnitt entlang der Linie B-B aus Fig.2.

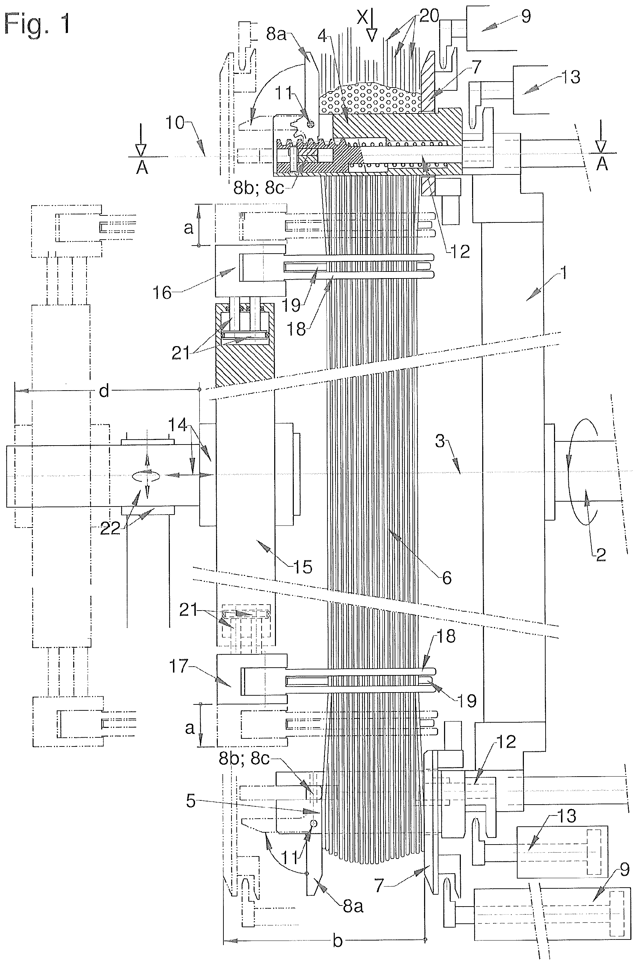

Die 2-Punkt-Haspel in **Fig. 1** besteht im wesentlichen aus dem fliegend gelagerten Haspelbalken 1, dem Drehantrieb 2 mit der Drehachse 3 und den beiden Tragarmen 4 und 5, die mit dem Haspelbalken 1 verbunden sind, und die den aufgehaspelten Fadenstrang 6 aufnehmen.

Um die einzelnen Fäden des Fadenstrangs seitlich zu führen und das Querschnittsprofil im Bereich der 180°-Umlenkung zu beeinflussen, sind an den Tragarmen auf beiden Seiten des Fadenstrangs Begrenzungen vorgesehen. Auf der dem Haspelbalken 1 zugewandten Seite des Fadenstrangs werden die Begrenzungen jeweils durch eine den Tragarm an mindestens drei Seiten umschließende Begrenzungsfläche 7 gebildet, die mit Hilfe von pneumatischen oder elektromotorischen Stellantrieben 9 in Richtung der Tragarm-Längsachse 10 verschoben werden kann. Auf der anderen Seite des Fadenstrangs werden die Begrenzungen gebildet durch mehrere schwenkbar gelagerte Begrenzungsstifte 8a, 8b und 8c, deren zugehörigen Drehachsen 11 senkrecht zur Tragarm-Längsachse 10 stehen.

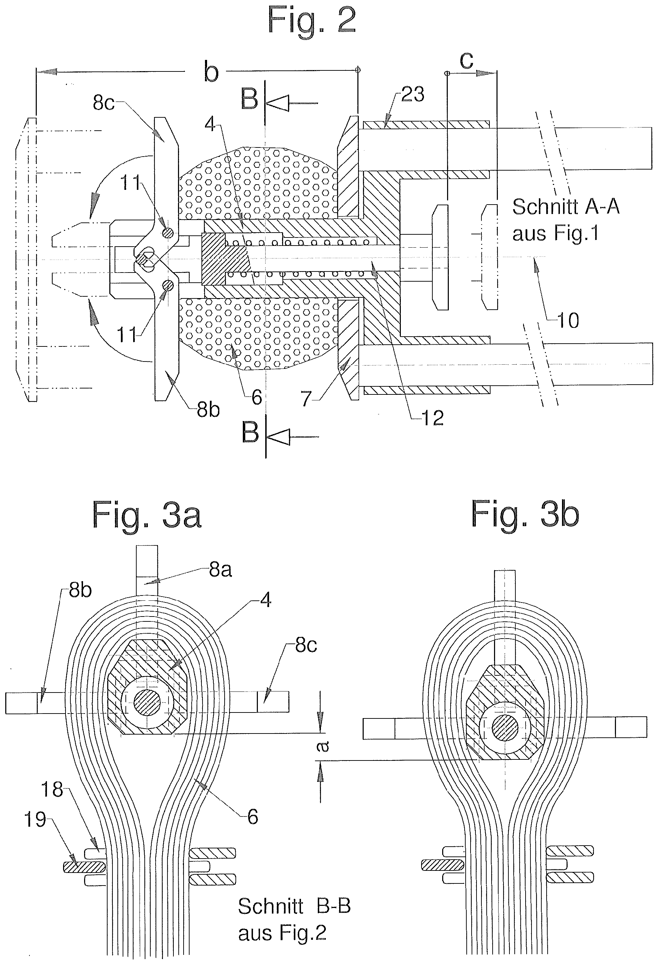

Die Begrenzungsstifte sind so geformt, dass sie nach einer 90°-Schwenkung kein Hindernis für den Fadenstrang bilden, wenn er in Richtung der Achse 10 vom Tragarm abgezogen wird. Die Schwenkbewegung der Begrenzungsstifte 8a, 8b und 8c wird gesteuert durch einen im Innern desTragarms axial verschiebbaren Stößel 12, der von einem Stellantrieben 13 betätigt wird. Im vorliegenden Beispiel steht der Begrenzungsstift 8a durch eine Verzahnung mit dem Stößel 12 in Eingriff; ein anderes Ausführungsbeispiel für die Koppelung von Dreh- und Linearbewegung zeigt Fig. 2.

Die Stellantriebe 9 und 13 sind ortsfest am Maschinengestell in einer Position angeordnet, in der die Haspel zur Entnahme des Fadenstrangs angehalten wird. Es ist aber auch möglich, die Stellantriebe direkt am Haspelbalken anzubringen, so dass sie sich mit der Haspel mitdrehen; jedoch muss in diesem Fall eine Drehübertragung der Energie- und Signalleitungen auf den rotierenden Haspelbalken vorgesehen werden.

In der in Fig. 1 dargestellten Situation hat die Haspel gestoppt, um den fertigen Fadenstrang abnehmen zu können. Dazu fährt eine Greifereinrichtung, bestehend aus einer Linearachse 14 und zwei oder mehr durch eine Traverse 15 verbundenen Greifern 16 und 17 an die Haspel heran und umschließt den Fadenstrang mit den Greiferbacken 18 und 19.
Die zugeführten Fäden 20 werden dann zunächst geklemmt und zwischen Fadenstrang 6 und der Klemmstelle durchtrennt. Dafür können Vorrichtungen eingesetzt werden, die aus der Praxis und der Patentliteratur bekannt sind und hier nicht nochmal beschrieben werden.
Um die Fadenspannung und damit die Reibung zwischen den Tragarmen und den dort aufliegenden Fäden bei der Abnahme des Fadenstrangs zu reduzieren, ist es vorteilhaft, den Abstand zwischen den Greiferbacken und den Tragarmen zu verringern. Dies kann mit Hilfe der pneumatisch oder elektromotorisch betätigten Teleskopeinrichtungen 21 erfolgen, die die Greifer 16 und 17 jeweils um einen Betrag a auseinander fahren, wobei der Fadenstrang 6 entsprechend gedehnt wird. Stattdessen kann aber auch der Abstand zwischen den Tragarmen 4 und 5 verringert werden, wenn die erwähnten Teleskopeinrichtungen im Haspelbalken 1 angeordnet sind.
Nachdem die Begrenzungsstifte 8a, 8b und 8c um 90° geschwenkt wurden, lässt sich der Fadenstrang von den Tragarmen abziehen, indem die Greifer 16 und 17 mittels der Linearachse 14 um eine Strecke d in Richtung der Haspel-Drehachse 3 verfahren werden.Gleichzeitig werden die Begrenzungsflächen 7 synchron zu den Greifern um die Strecke b in die gleiche Richtung bewegt, wobei alle Fäden aus dem Bereich der 180°-Umlenkung von den Tragarmen heruntergeschoben werden.
Die Greifereinrichtung kann dann den Fadenstrang in einer beliebigen Richtung zur Weiterverarbeitung transportieren, z.B. mit Hilfe der Linearachse 22 oder sonstiger Handhabungseinrichtungen.
Im hier dargestellten Ausführungsbeispiel ist es zweckmäßig, wie es auch von sonstigen manuellen und automatisierten Haspelvorrichtungen bekannt ist, beim Start des Haspelvorgangs den Anfang der zugeführten Fäden an der Haspel zu fixieren ("Anfangsklemme"). Dafür geeignete Vorrichtungen sind aus der Praxis bekannt und sind daher hier nicht nochmal beschrieben.
Weiterhin ist es zweckmäßig, die Anpresskraft der besagten Anfangsklemme aufzuheben, wenn der Fadenstrang von den Tragarmen abgestreift wird.

**Fig. 2** zeigt einen Schnitt durch den Tragarm 4. Die hier sichtbaren Begrenzungsstifte 8b und 8c sind ebenfalls durch eine Axialverschiebung c des Stößels 12 um 90° zu schwenken, so dass anschließend die Begrenzungsfläche 7, geführt durch Linearführungen 23, um die Strecke b in Richtung der Tragarm-Längsachse 10 verschoben werden kann, um den Strang 6 vom Tragarm abzustreifen.
Die Schwenkbewegung der Begrenzungsstifte wird in diesem Beispiel durch eine Kulissenführung bewirkt, wobei ein am Stößel 12 befestigter Bolzen in Nuten der Begrenzungsstifte eingreift.

**Fig. 3a** zeigt den Schnitt B-B quer zum Tragarm 4. Es ist vorteilhaft, wenn die äußeren Begrenzungsstifte 8b und 8c um einen Winkel von 180° oder mehr zueinander versetzt sind.

**Fig. 3b** zeigt den Schnitt B-B in einer Situation, in der Tragarm 4 und Greiferbacken 18;19 um einen Betrag a gegeneinander bewegt worden sind. Dadurch wurden die Fäden im Bereich der 180°-Umschlingung vom Tragarm abgehoben, so dass der gesamte Fadenstrang sich nun abnehmen lässt, ohne dass einzelne Fäden hängen bleiben.
1. Vorrichtung und Verfahren zum Handhaben eines aufgehaspelten Fadenstrangs.
   2.1 Fadenförmiges Gut wird für bestimmte Anwendungsgebiete hinter einer Produktionsanlage auf einer rotierenden Haspel zu einem Fadenstrang gesammelt, der anschließend mit Folie umwickelt, fixiert und in Bündel bestimmter Länge aufgeteilt wird. Für eine rationelle Fertigung muss der Strang vollautomatisch von der Haspel abgenommen und einer separaten Station zur Weiterverarbeitung bereitgestellt werden.
   2.2 Die Erfindung schlägt vor, den aufgehaspelten Fadenstrang (6) mit mehreren Greifern (16;17) zu erfassen und von der Haspel abzuziehen, wobei Begrenzugsstifte (8a;8b;8c), mit denen die Fäden auf den Tragarmen (4;5) an der Außenseite gehalten werden, um 90° zu schwenken sind. Unterstützt wird der Vorgang , indem eine Begrenzungsfläche (7) von der anderen Seite her den Fadenstrang von den Tragarmen abstreift. Dabei ist es zweckmäßig, den Anpressdruck der den Tragarm umschlingenden Fäden dadurch zu verringern, dass die Greifer (16;17) und die Tragarme (4;5) sich annähern.
   2.3 Diese Vorrichtung ist insbesondere anzuwenden bei Hohlfäden für Dialysatoren und ähnliche Filtereinrichtungen, die auf einer Zwei-Punkt-Haspel gesammelt werden.

### Liste der Bezugszeichen:

- 1: Haspelbalken
- 2: Drehantrieb (der Haspel)
- 3: Drehachse (der Haspel)
- 4;5: Tragarm
- 6: Fadenstrang
- 7: Begrenzungsflächen
- 8a;8b;8c: Begrenzungsstifte
- 9: Stellantrieb (für Begrenzungsfläche)
- 10: Tragarm-Längsachse
- 11: Drehachse (der Begrenzungsstifte)
- 12: Stößel
- 13: Stellantrieb (für Begrenzungsstifte)
- 14: Linearachse (für Greifereinrichtung)
- 15: Traverse
- 16;17: Greifer
- 18;19: Greiferbacken
- 20: zugeführte Fäden
- 21: Teleskopeinrichtung (für Greifer)
- 22: Linear-/Rotationsachse (für Greifereinrichtung)
- 23: Linearführung (für Begrenzungsfläche)

## Patentansprüche

1. Vorrichtung zum Handhaben eines aufgehaspelten Fadenstrangs (6),
• der insbesondere aus Hohlfäden für Dialysatoren oder ähnliche Filtereinrichtungen besteht,
• mit einer Haspel mit nur zwei Tragarmen (4; 5) auf denen der Fadenstrang (6) aufgehaspelt wird,
• wobei die Haspel in einer definierten Position stoppt, wenn die gewünschte Anzahl von Fäden (20) erreicht ist,
• und wobei ein Übergabegreifer (16; 17) vorgesehen ist, der die der Haspel zugeführten Fäden (20) festhalten, durchtrennen und an eine neue und/oder leere Haspel übergeben kann,
• sowie eine Klemme, die den Anfang der zugeführten Fäden an der neuen und/oder leeren Haspel fixiert,
• sowie Begrenzungen (7; 8a; 8b; 8c) an den Tragarmen (4; 5), die den Fadenstrang (6) im Bereich der Umlenkung seitlich führen und halten,
**gekennzeichnet durch** folgende Merkmale:
1.1 auf der dem Haspelbalken (1) abgewandten Seite des Fadenstrangs (6) sind an den Tragarmen (4; 5) jeweils mehrere Begrenzungsstifte (8a; 8b; 8c) angebracht, die um 90° schwenkbar gelagert sind, und deren Drehachsen (11) senkrecht zur Tragarm-Längsachse (10) verlaufen;
1.2 ein im Innern der Tragarme längsverschieblich gelagerter Stößel (12) ist mit den Begrenzungsstiften (8a; 8b; 8c) so verbunden, dass eine Linearbewegung in Richtung der Tragarm-Längsachse (10) um den Betrag (c) eine 90°-Drehung der Begrenzungsstifte bewirkt,
1.3 eine Greifereinrichtung, bestehend aus mindestens zwei Greifern (16; 17) mit den zugehörigen Greiferbacken (18; 19), welche den Fadenstrang (6) umschließen und mit Hilfe einer Linearachse (14) um die Strecke (d) in Richtung der Haspel-Drehachse (3) verschieben kann, wobei die Fäden von den Tragarmen (4; 5) abgestreift werden;
1.4 der Abstand zwischen den Greifern (16; 17) und den Tragarmen (4; 5) lässt sich jeweils um einen Betrag (a) verkürzen, entweder durch pneumatisch oder elektromotorisch angetriebene TeleskopEinrichtungen (21), die den Abstand zwischen den Greifern (16) und (17) verringern, oder durch entsprechende Einrichtungen im Haspelbalken (1), die den Abstand zwischen den Tragarmen (4) und (5) verringern.

2. Vorrichtung zum Handhaben eines aufgehaspelten Fadenstrangs nach Anspruch 1, **dadurch gekennzeichnet, dass** die Begrenzungsfläche (7), die auf der dem Haspelarm (1) zugewandten Seite des Fadenstrangs (6) liegt, verschiebbar gelagert ist und synchron zu den Greifern (16; 17) in Richtung der Tragarm-Längsachse (10) um eine Strecke (b) bewegt werden kann.

3. Vorrichtung zum Handhaben eines aufgehaspelten Fadenstrangs nach Anspruch 1 und 2, **dadurch gekennzeichnet, dass** die Linearbewegungen von Stößel (12) und Begrenzungsfläche (7) von pneumatischen oder elektromotorischen Stellantrieben (9; 13) bewirkt werden, die ortsfest am Maschinengestell in einer Position angebracht sind, in der die Tragarme (4; 5) der Haspel stoppen, wenn die gewünschte Fadenzahl auf der Haspel erreicht ist.

4. Vorrichtung zum Handhaben eines aufgehaspelten Fadenstrangs nach Anspruch 1 und 2, **dadurch gekennzeichnet, dass** die Linearbewegungen von Stößel (12) und Begrenzungsfläche (7) von pneumatischen oder elektromotorischen Stellantrieben (9; 13) bewirkt werden, die am Haspelbalken (1) angebracht sind.

5. Verfahren zum Handhaben eines aufgehaspelten Fadenstrangs mit einer Vorrichtung nach Anspruch 1 und 2,
das folgende Schritte umfasst:
5.1 die Haspel stoppt in der vorgegebenen Stellung,
5.2 die Greifer (16; 17) mit den Greiferbacken (18; 19) umschließen den Fadenstrang,
5.3 ein Übergabegreifer klemmt die zugeführten Fäden (20),
5.4 eine Schneidvorrichtung durchtrennt die zugeführten Fäden (20) zwischen Fadenstrang (6) und Übergabegreifer,
5.5 die Begrenzungsstifte (8a; 8b; 8c) werden um 90° geschwenkt,
5.6 die Abstände zwischen den Tragarmen (4; 5) und den Greifern (16; 17) werden jeweils um die Strecke (a) verringert;
5.7 die Anpresskraft der Anfangsklemme wird aufgehoben;
5.8 die Linearachse (14) verfährt die Greifer (16; 17) mitsamt dem Fadenstrang (6) um die Strecke (d), synchron dazu wird die Begrenzungsfläche (7) um die Strecke (b) verschoben;
5.9 eine weitere Linear- oder Rotationsachse (22) verfährt die Greifer (16; 17) mitsamt dem Fadenstrang (6) zu einer Weiterverarbeitungsstation;
5.10 der Übergabegreifer übergibt die zugeführten Fäden an die Anfangsklemme der leeren Haspel;
5.11 die Haspel startet einen neuen Haspelzyklus.

6. Verfahren zum Handhaben eines aufgehaspelten Fadenstrangs entsprechend Anspruch 5,
**dadurch gekennzeichnet, dass**
• die Schritte 5.2 und 5.3 gleichzeitig ablaufen,
• sowie die Schritte 5.4 bis 5.7
• und die Schritte 5.9 bis 5.10.

## Claims

1. Method for handling a wound thread strand (6),
• which in particular consists of hollow threads for dialysers or similar filtration devices,
• having a reel with only two carrier arms (4; 5) on which the thread strand (6) is wound,
• wherein the reel stops in a defined position when the desired number of threads (20) is reached,
• and wherein there is provided a transfer gripper (16; 17) which is able to hold the threads (20) supplied to the reel, cut through them and transfer them to a new and/or empty reel,
• and also a clamp which fixes the start of the supplied threads to the new and/or empty reel,
• and also limiting means (7; 8a; 8b; 8c) on the carrier arms (4; 5) which guide and hold the thread strand (6) laterally in the region of the rerouting,
**characterised by** the following features:
1.1 on the side of the thread strand (6) that is remote from the reel bar (1), in each case a plurality of limiting pins (8a; 8b; 8c) are attached to the carrier arms (4; 5), which limiting pins are mounted to be pivotable through 90° and the axes of rotation (11) of which extend perpendicular to the carrier arm longitudinal axis (10);
1.2 a plunger (12) mounted in a longitudinally displaceable manner in the inside of the carrier arms is connected to the limiting pins (8a; 8b; 8c) in such a manner that a linear movement in the direction of the carrier arm longitudinal axis (10) by the amount (c) brings about a 90° rotation of the limiting pins;
1.3 a gripper device, consisting of at least two grippers (16; 17) with the associated gripper jaws (18; 19), is able to enclose the thread strand (6) and, with the aid of a linear shaft (14), move it in the direction of the reel axis of rotation (3) by the distance (d), whereby the threads are stripped from the carrier arms (4; 5);
1.4 the distance between the grippers (16; 17) and the carrier arms (4; 5) can in each case be shortened by an amount (a), either by pneumatically or electric motor driven telescopic devices (21), which reduce the distance between the grippers (16) and (17), or by corresponding devices in the reel bar (1), which reduce the distance between the carrier arms (4) and (5).

2. Device for handling a wound thread strand according to claim 1, **characterised in that** the limiting surface (7), which is located on the side of the thread strand (6) that faces the reel arm (1), is displaceably mounted and can be moved synchronously with the grippers (16; 17) in the direction of the carrier arm longitudinal axis (10) by a distance (b).

3. Device for handling a wound thread strand according to claim 1 and 2, **characterised in that** the linear movements of the plunger (12) and the limiting surface (7) are effected by pneumatic or electromotive actuators (9; 13) which are fixedly mounted on the machine frame in a position in which the carrier arms (4; 5) of the reel stop when the desired number of threads on the reel is reached.

4. Device for handling a wound thread strand according to claim 1 and 2, **characterised in that** the linear movements of the plunger (12) and the limiting surface (7) are effected by electromotive actuators (9; 13) which are mounted on the reel bar (1).

5. Method for handling a wound thread strand using a device according to claim 1 and 2,
which method comprises the following steps:
5.1 the reel stops in the specified position;
5.2 the grippers (16; 17) with the gripper jaws (18; 19) enclose the thread strand;
5.3 a transfer gripper clamps the supplied threads (20);
5.4 a cutting device cuts through the supplied threads (20) between the thread strand (6) and the transfer gripper;
5.5 the limiting pins (8a; 8b; 8c) are pivoted through 90°;
5.6 the distances between the carrier arms (4; 5) and the grippers (16; 17) are in each case reduced by the distance (a);
5.7 the contact pressure of the start clamp is removed;
5.8 the linear shaft (14) moves the grippers (16; 17) together with the thread strand (6) by the distance (d); synchronously therewith, the limiting surface (7) is displaced by the distance (b);
5.9 a further linear or rotary shaft (22) moves the grippers (16; 17) together with the thread strand (6) to a further-processing station;
5.10 the transfer gripper transfers the supplied threads to the start clamp of the empty reel;
5.11 the reel starts a new winding cycle.

6. Method for handling a wound thread strand according to claim 5,
**characterised in that**
• steps 5.2 and 5.3 take place at the same time,
• as do steps 5.4 to 5.7
• and steps 5.9 to 5.10.

## Revendications

1. Appareil de manipulation d'un fil bobiné (6),
• lequel est constitué en particulier de fibres creuses pour les appareils de dialyse ou les dispositifs de filtrage similaires,
• doté d'un bobinoir avec seulement deux bras de support (4 ; 5) sur lesquels le fil (6) est bobiné,
• dans lequel le bobinoir s'arrête dans une position définie, lorsque le nombre souhaité de fibres (20) est atteint,
• et dans lequel une pince de transfert (16 ; 17) est prévue, laquelle peut maintenir les fibres (20) amenées au bobinoir, les sectionner et les transférer à un bobinoir vide et/ou nouveau,
• ainsi qu'un crampon, lequel fixe le début des fibres amenées au bobinoir vide et/ou nouveau,
• ainsi que des délimitations (7 ; 8a ; 8b ; 8c) sur les bras de support (4 ; 5), lesquelles guident et maintiennent latéralement le fil (6) dans la zone de la déviation,
**caractérisé par** les points suivants :
1.1. du côté du fil (6) se détournant de la flasque (1) du bobinoir, plusieurs broches de délimitation (8a ; 8b ; 8c) sont agencées sur les bras de support (4 ; 5), disposées de manière pivotante à 90°, et dont les axes de rotation (11) sont perpendiculaires à l'axe longitudinal du bras de support (10) ;
1.2. un coulisseau (12) disposé à l'intérieur du bras de support et pouvant coulisser dans la longueur est relié aux broches de délimitation (8a ; 8b ; 8c) de telle sorte qu'un mouvement linéaire d'un montant (c) dans la direction de l'axe longitudinal du bras de support (10) opère une rotation de 90° des broches de délimitation,
1.3. un dispositif de préhension, consistant en au moins deux pinces (16 ; 17) dotée des mâchoires respectives (18 ; 19), lequel peut entourer le fil (6) et le déplacer sur un parcours (d) dans la direction de l'axe de rotation du bobinoir (3) à l'aide d'un axe linéaire (14), dans lequel les fibres sont retirées des bras de support (4 ; 5) ;
1.4. l'écart entre les pinces (16 ; 17) et les bras de support (4 ; 5) est raccourci respectivement d'un montant (a), soit par un dispositif télescopique (21) à entraînement pneumatique ou électromoteur réduisant l'écart entre les pinces (16) et (17), soit par des dispositifs correspondants dans la flasque de bobinoir (1) réduisant l'écart entre les bras de support (4) et (5).

2. Appareil de manipulation d'un fil bobiné selon la revendication 1, **caractérisé en ce que** la surface de délimitation (7) qui se trouve du côté du fil (6) tourné vers le bras du bobinoir (1) est disposée de façon coulissante et peut être mue sur un parcours (b) de façon synchrone aux pinces (16 ; 17) dans la direction de l'axe longitudinal du bras de support (10).

3. Appareil de manipulation d'un fil bobiné selon les revendications 1 et 2, **caractérisé en ce que** les mouvements linéaires du coulisseau (12) et de la surface de délimitation (7) sont opérés par des actionneurs pneumatiques ou électromoteurs (9 ; 13), lesquels sont agencés de manière stationnaire au châssis de machine dans une position où les bras de support (4 ; 5) du bobinoir s'arrêtent lorsque le nombre souhaité de fibres sur le bobinoir est atteint.

4. Appareil de manipulation d'un fil bobiné selon les revendications 1 et 2, **caractérisé en ce que** les mouvements linéaires du coulisseau (12) et de la surface de délimitation (7) sont opérés par des actionneurs pneumatiques ou électromoteurs (9 ; 13), lesquels sont agencés sur la flasque de bobinoir (1).

5. Procédé de manipulation d'un fil bobiné avec un appareil selon les revendications 1 et 2, comprenant les étapes suivantes :
5.1. le bobinoir s'arrête dans la position prédéfinie,
5.2. les pinces (16 ; 17) avec les mâchoires (18 ; 19) entourent le fil,
5.3. une pince de transfert cramponne les fibres amenées (20),
5.4. un dispositif coupant coupe les fibres amenées (20) entre le fil (6) et la pince de transfert,
5.5. les broches de limitation (8a ; 8b ; 8c) sont pivotées de 90°,
5.6. les écarts entre les bras de support (4 ; 5) et les pinces sont réduits respectivement du parcours (a) ;
5.7. la force de pression du crampon de début est levée ;
5.8. l'axe linéaire (14) conduit les pinces (16 ; 17) avec le fil (6) sur le parcours (d), et de façon synchrone la surface de délimitation (7) est déplacée sur le parcours (b).
5.9. un axe linéaire ou de rotation supplémentaire (22) conduit les pinces (16 ; 17) avec le fil (6) à une station de traitement ultérieur ;
5.10. la pince de transfert transfère les fibres amenées au crampon de début du bobinoir vide ;
5.11. le bobinoir commence un nouveau cycle de bobinage.

6. Procédé de manipulation d'un fil bobiné correspondant à la revendication 5, **caractérisé en ce que**
• les étapes 5.2 et 5.3 se déroulent simultanément,
• ainsi que les étapes 5.4 à 5.7
• et les étapes 5.9 à 5.10.
